# EUROPEAN PATENT SPECIFICATION

(11) **EP 0 677 390 B1**
(45) Date of publication and mention of the grant of the patent: **15.03.2000**
(21) Application number: 95302312.4
(22) Date of filing: 06.04.1995
(51) Int. Cl.: B41J 2/205, B41J 2/51

(54) **Method of improving the printing of graphic images and related ink jet dot matrix printing apparatus**
Verfahren zur Verbesserung des Druckens von graphischen Bildern und entsprechendes Tintenstrahldruckgerät
Procédé pour perfectionner l'impression d'images graphiques et appareil d'impression à jet d'encre correspondant

(30) Priority: 14.04.1994 IT TO940286
(43) Date of publication of application: 18.10.1995
(73) Proprietor: Olivetti Lexikon S.p.A., 10015 Ivrea (TO) (IT)
(72) Inventor: Scardovi, Alessandro, I-Ivrea (TO) (IT); Clemente, Alcide, I-68 Borgofranco di Ivrea (TO) (IT)
(74) Representative: Robson, Aidan John

(56) References cited:
- EP-A- 0 517 519
- EP-A- 0 597 714
- US-A- 4 743 127
- US-A- 4 812 859
- US-A- 5 239 312

## Description

### FIELD OF THE INVENTION

The present invention relates to a method of printing on a support, typically but not exclusively a sheet of paper, a graphic image formed by a multiplicity of dots which are printed or left blank, in positions corresponding to a matrix of dots disposed in accordance with a grid of a given pitch, by means of a printing apparatus comprising a plurality of printing elements which can be selectively activated for printing in accordance with said dot matrix and referred to hereinafter for the sake of simplicity as the printer, in such a way as to minimise the phenomena of non-uniformity caused by imperfections and non-homogeneities in the printing elements.

### BACKGROUND OF THE INVENTION

The printers known in the current state of the art comprise a fixed or removable printing head comprising a plurality of printing elements which are disposed in various ways on the head. A possible arrangement which is adopted in the current state of the art for example is shown in US patent No 4 812 859 relating to an ink jet printing head in which the printing elements are formed by a plurality of ink emission elements which, in accordance with the selective application of electrical pulses, emit minute drops of ink through a plurality of nozzles. The nozzles are distributed in two lines which are spaced from each other by a given number of pitches or steps of the above-indicated grid, which are substantially parallel to each other and perpendicular to the direction of movement of the head, wherein the distance between two successive nozzles belonging to the same line is equal to double the pitch of the grid referred to above and the nozzles of the first line are displaced by a pitch step of the grid with respect to the nozzles in the second line.

With the above-described arrangement, in each travel movement of the head transversely with respect to the support, which travel movement is referred to hereinafter as scanning, it is possible to print an image of the above-described type on a strip of the support of a height equal to the number of pitches or steps of the grid equal to the total number of nozzles less one, with all the printing elements on the head being selectively activated.

By now advancing the support or alternatively displacing the head by a number of steps equal to the total number of nozzles, which advance movement is referred to herein as line spacing, again effecting a scanning motion and selectively activating all the printing elements on the head, it is possible to form another identical image on a fresh strip of the support without any interruption in continuity with respect to the previous one; by repeating that procedure the whole support can be printed upon.

Any image whatsoever of the above-described type can thus be printed on the support, by applying or not applying the electrical pulses to the elements for emitting ink in selectively defined positions; the possible printable positions corresponding to the grid will be referred to hereinafter as "image elements" and the image elements at which a drop of ink is effectively emitted by the emission elements will be referred to hereinafter as "dots"; in addition, the operation consisting of effecting a scanning motion and at the same time selectively activating all the ink emission elements on the head in such a way as to print all the dots which compose the corresponding image will be referred to hereinafter as a "pass".

It will be clear in accordance with the first method described above that all the dots belonging to a single row of the grid of an elementary pitch are formed with drops of ink which come from the same nozzle; as a consequence of that, if an ink emission element becomes inoperative or a nozzle is completely blocked or suffers a malfunction in the sense that the direction of the drop emitted suffers a deviation with respect to the theoretical trajectory thereof, for example because of an impurity which has become deposited on the edge of the nozzle, a very apparent non-uniformity is formed in the image which is printed, for example in the form of a thin blank line.

A second printing method is known in the current state of the art, which seeks to make the above-indicated defect less apparent, by providing that the dots belonging to an individual row of the grid are formed with drops of ink which come alternately from two different ink emission elements, as described for example in US patents Nos 4 963 882, 4 967 203 and 4 999 646.

That result is achieved by applying the following second method to make up each individual pass:
- a first scanning operation is effected in which the nozzles emit the drops of ink alternately only in accordance with a first half of the image elements,
- the support or alternatively the head is advanced by half a line spacing,
- a second scanning operation is effected in which the nozzles emit the drops of ink in the second half of the image elements, which are complementary with respect to the first half; that procedure being repeated, the result is printing of the entire support, as with the first method, but in a longer time, involving as it does double the number of passes.

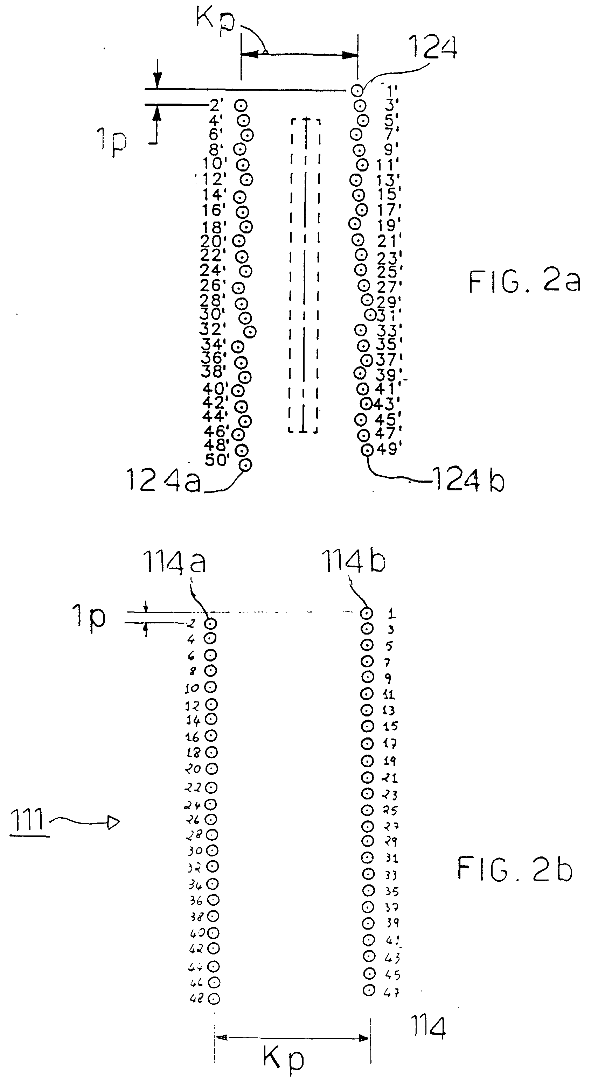

To illustrate in greater detail this second method, reference will be made to the printing head 131 shown in Figure 2a where the nozzles 124 which are connected to the corresponding ink emission elements (not shown in the drawing) are disposed in two substantially parallel lines 124a and 124b which are spaced from each other by 10 elementary pitches "p" which are normally equal to about 85µm (1/300 ths of an inch) but may be between about 250µm and 40µm (1/100 ths and 1/600 ths of an inch), each line comprising 25 nozzles which are spaced vertically by 2 pitches "p" and the positions of the nozzles 124 belonging to the line 124a being displaced by 1 pitch with respect to the positions of the corresponding nozzles 124 belonging to the line 124b.

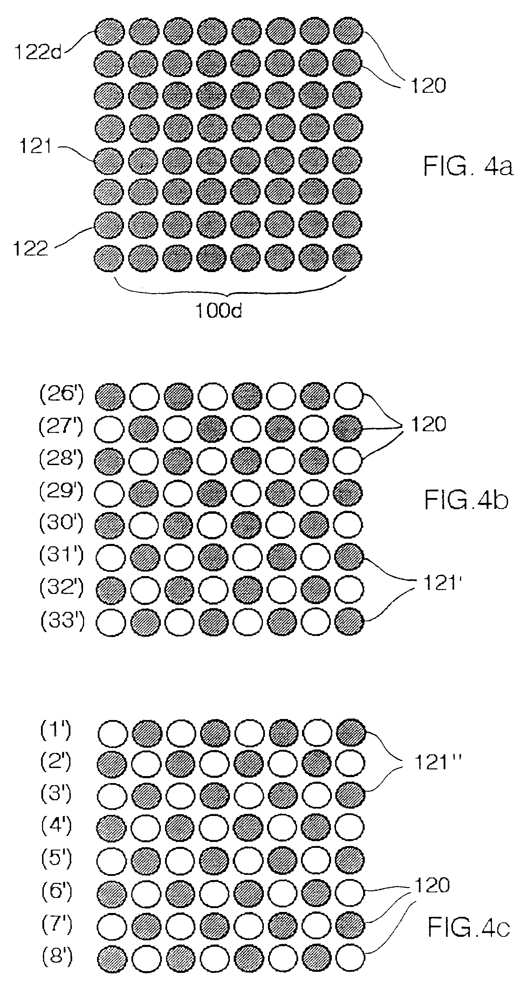

Analysing therefore the mode of operation involved for printing on the support a uniform image 100d with a gradation of grey having an optical density of 100% formed by a complete matrix of dots (see Figure 4a showing for the sake of clarity only 8 rows 122 of 8 image elements 120 each); the image 100d will be printed completely by the performance of two scanning operations such that in the first scanning operation (see Figure 4b) a part of the nozzles 124, for example those indicated by references 26' to 33' in Figure 2a and referenced by the bracketed numerals in Figure 4b, emit the drops of ink at positions corresponding alternately only to a half of the image elements 120, printing them as dots 121', and in the second scanning movement (see Figure 4c), after the support is advanced by half a line spacing, another part of the nozzles 124, for example those indicated by references 1' to 8' in Figure 2a and referenced by the bracketed numbers in Figure 4c, emit the drops of ink for the image elements 120 which are complementary with respect to those selected during the first partial scanning operation, printing them as dots 121''. In Figures 4a, 4b and 4c the image elements 120 which are spaced from each other by about 85µm (1/300 ths of an inch) both horizontally and vertically are generally represented by a blank or a hatched circle while the dots 121, 121' and 121'' are represented by a hatched circle.

That procedure correctly provides that each individual row 122 of the image 100d is printed with the assistance of two different nozzles 124, thereby minimising the effects of possible imperfections in the nozzles themselves and the corresponding ink emission elements; in the example shown in Figure 4a the row 122d is printed with the nozzles 1' and 26'.

This second method is effective, in particular when alpha-numeric characters have to be printed, as was a common practice in office work up to a short time ago. What has become more and more widespread however is what is referred to as "business graphic" involving printing images with different grey gradations, produced by means of regularly arranged assemblies of image elements which can be printed or left blank. The grey gradation is more or less optically dense according to whether the printed dots are more or less rarefied. Application programs are commercially available for computers, which can generate a given number of grey gradations, typically 2^{m} wherein m ranges from 2 to 10, which can be individually selected; those numbers depend on the dimensions of the elementary assembly of image elements (basic matrix) with which the grey gradation is effected: it is known per se for example that if a basic matrix of 8x8 image elements is used, it is possible to provide 64 (=2⁶) different grey gradations. Or, as other examples, a basic matrix of 4x4 provides 16 (=2⁴) grey gradations; a basic matrix of 16x16 provides 256 (=2⁸) grey gradations; and a basic matrix of 32x32 provides 1024 (=2¹⁰) grey gradations.

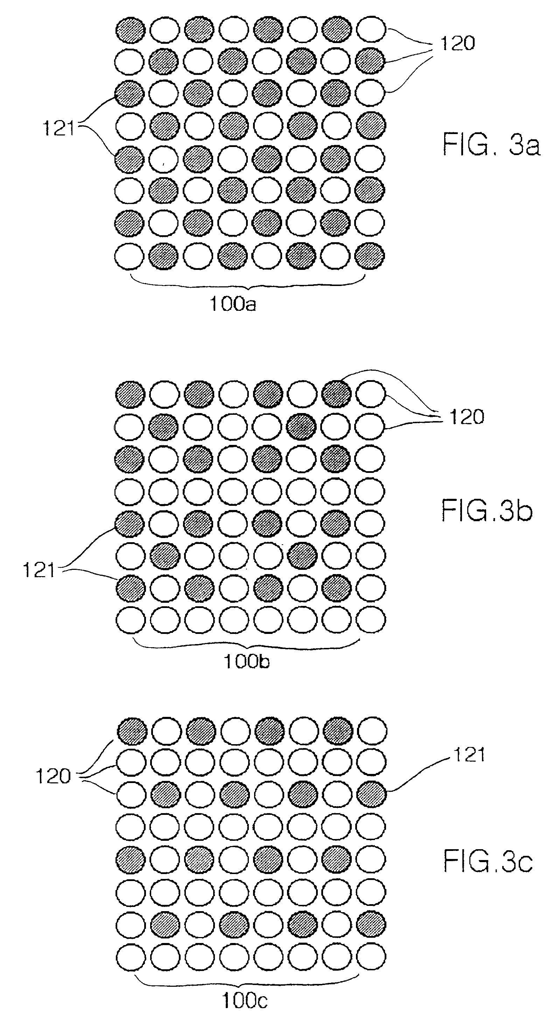

To give an example in this respect, the situation will be analysed in which a basic matrix of 8x8 image elements is used to produce 64 different grey gradations, referring to Figures 3a, 3b and 3c which respectively represent 3 different gradations 100a, 100b and 100c corresponding to an optical density of 50%, 31.25% and 25%: as already indicated above, the image elements 120 which are spaced from each other by 85µm (1/300 ths of an inch) both horizontally and vertically are represented by a blank or hatched circle while the dots 121 are represented by a hatched circle.

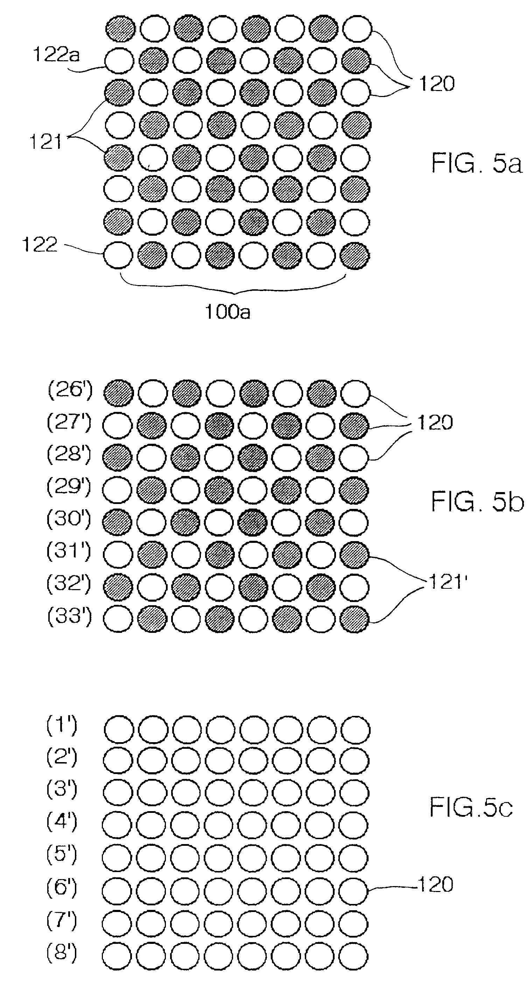

The second method illustrated above will first be used to print the image 100a on the support, with a grey gradation involving an optical density of 50% (see Figures 5a, 5b and 5c): the image 100a will be completed by effecting two scanning movements, the results of which are respectively illustrated for the first scanning movement and for the second scanning movement in Figures 5b and 5c. In this case it will be immediately noted that the dots 121 belonging to the same row 122 of the image 100a are all printed during the first scanning movement and thus by the same nozzle; in the example shown in Figure 5a the row 122a is printed only with the nozzle 33' and therefore the second method of the known art is not capable of minimising any non-uniformities or imperfections in the ink emission elements and the corresponding nozzles.

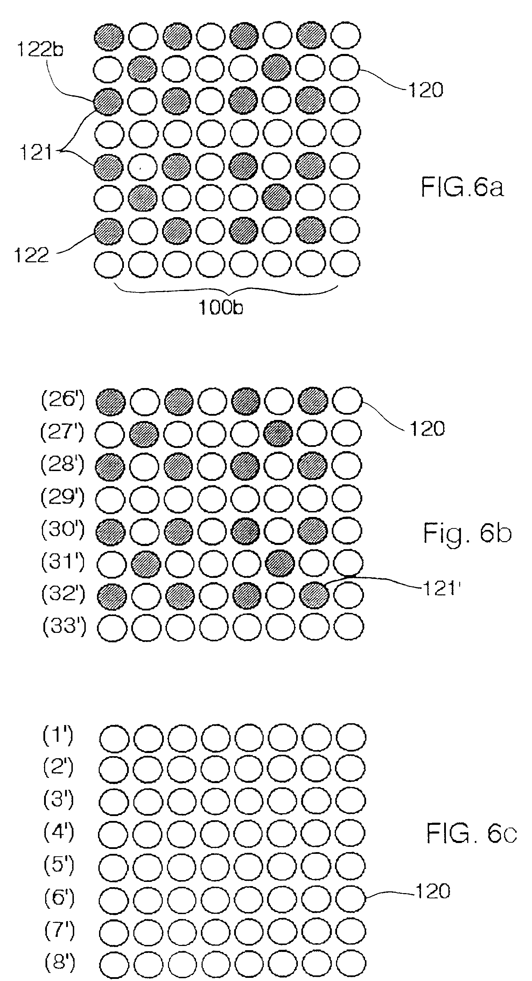

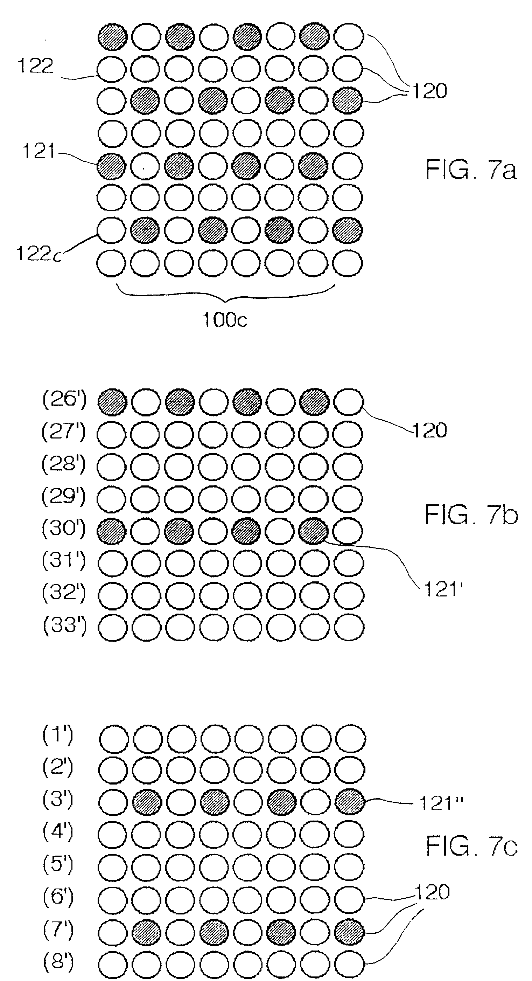

A similar result is attained for example when printing uniform images with an optical density of 31.25% and 25% which are respectively illustrated in Figures 6a, 6b and 6c and Figures 7a, 7b and 7c where the same indications as already used in the preceding Figures have been employed; the result here for example is that the row 122b in Figure 6a is printed only with the nozzle 28' and the row 122c in Figure 7a is printed only with the nozzle 7'.

It will be immediately appreciated by extension that, all those matrices being based on an even number of image elements, when the second printing method described above is used, the effectiveness of the method is greatly reduced or absolutely and completely nullified, especially for those grey gradations which are more remote from the maximum optical density.

### SUMMARY OF THE INVENTION

Referred embodiments of the present invention provide a dot matrix printing method which makes it possible to minimise the effect caused by failed or poor functioning of a printing element even in a situation where the image to be printed consists of a regularly arranged multiplicity of assemblies of dots which are printed and left blank.
"The European Patent Application N° A-597714, which is an Article 54(3) EPC document, discloses a third method based on a thinning mask or grid having non-uniform print factor, applied to N scanning operations, N being an integer greater than 1. As a consequence of the non-uniform print factor, this method provides for adjacent dots, or at least dots closer than N pitches, to be laid down by the same nozzle during the same pass of the print head. Therefore, in the solution provided by this document, a defect of one ink emission element will become apparent as a defective horizontal straight line. For example, if a nozzle becomes inoperative, a thin blank line is formed on the printed image."

The present invention may be embodied by an ink jet dot matrix printing apparatus for forming images on a support, using the above-mentioned printing method.

The invention is defined in its various aspects in the appended claims to which reference should now be made.

A preferred embodiment of the invention will now be described by way of example with reference to the accompanying drawings:

### BRIEF DESCRIPTION OF THE DRAWINGS

Figure la diagrammatically shows an ink jet printing apparatus embodying the present invention,
Figure 2a diagrammatically shows the arrangement of the nozzles in a printing head of monochromatic type in accordance with the known art,
Figure 2b diagrammatically shows the arrangement of the nozzles in a printing head of the monochromatic type embodying the present invention,
Figures 3a, 3b and 3c show some examples of basic matrices for generating different grey gradations,
Figures 4a, 4b and 4c show the printing result which is obtained using a method of the known art for printing a complete grid of dots,
Figures 5a, 5b and 5c, 6a, 6b and 6c, and 7a, 7b and 7c show the printing result obtained using a method in the known art for printing the basic matrices shown in Figures 3a, 3b and 3c,
Figures 8a, 8b, 8c and 8d show the printing result obtained using a first embodiment of the method of the present invention for printing a complete grid of dots,
Figures 9a, 9b and 9c, 10a, 10b and 10c, 11a, 11b and 11c show the printing result obtained using a first embodiment of the method of the present invention for printing the basic matrices shown in Figures 3a, 3b and 3c,
Figures 12a, 12b, 12c and 12d show the printing result obtained using a second embodiment of the method of the present invention for printing a complete grid of dots,
Figures 13a, 13b, 13c and 13d show the printing result obtained using a second embodiment of the method of the present invention for printing the basic matrix shown in Figure 3a,
Figures 14a, 14b, 14c and 14d show the printing result obtained using a third embodiment of the method of the present invention for printing a complete grid of dots,
Figures 15a, 15b, 15c and 15d show the printing result obtained using a third embodiment of the method of the present invention for printing the basic matrix shown in Figure 3a,
Figures 16a, 16b, 16c and 16d show the printing result obtained using a fourth embodiment of the method of the present invention for printing a complete grid of dots,
Figures 17a, 17b, 17c and 17d show the printing result obtained using a fourth embodiment of the method of the present invention for printing the basic matrix shown in Figure 3a, and
Figure 18 diagrammatically shows the arrangement of the nozzles in a printing head for forming images of the type having a plurality of colours.

### DETAILED DESCRIPTION OF A PREFERRED EMBODIMENT

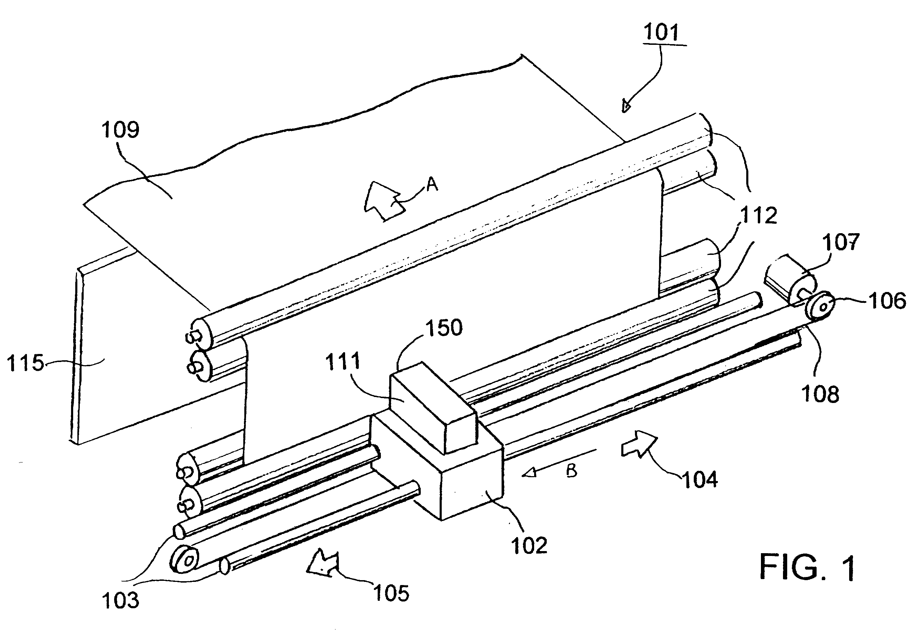

The ink jet dot matrix printing apparatus 101 shown in Figure 1 comprises a carriage 102 slidable on a guide 103 in a direction B both in the direction indicated by the arrow 104 (forward movement) and in the opposite direction as indicated by the arrow 105 (return movement) under the action of an entrainment system comprising a traction element 108 (which can be for example a flexible cable formed into an annular configuration or a toothed belt or other equivalent element) and a motor 107 which drives the traction element 108 to produce movement thereof by means of a pulley 106. The carriage 102 carries a device for forming images, or printing head, 111 which slides in front of a support 109 for receiving the images, which support 109 is advanced through the printing apparatus 101 by entrainment means 112 (which can be for example rollers, pairs of rollers, belts or other equivalent means) in the direction A which is perpendicular to the direction B of sliding movement of the carriage 102.

On the face 150 which is towards the support 109 the head 111 carries a multiplicity of nozzles 114 (see Figure 2b) (by way of non-limiting example 48), to which there are connected the corresponding emission elements (not shown). The nozzles 114 are disposed in two substantially parallel lines 114a and 114b which are spaced from each other by an integral number K of elementary scanning pitches or steps "p", normally equal to about 85µm (1/300 ths of an inch) but which may be between about 250µm and 40µm (1/100 ths and 1/600 ths of an inch) and perpendicular to the direction B of the movement of the carriage 102, each line comprising an equal number of nozzles 114. Within each line 114a and 114b the nozzles 114 are vertically spaced by about 170µm (2/300 ths an inch) and the positions of the nozzles 114 belonging to the line 114a are displaced by 85µm (1/300 ths of an inch) with respect to the positions of the corresponding nozzles 114 in the line 114b; in addition an electronic control 115 (see Figure 1) of the printing apparatus 101 is capable of advancing the support 109 by multiple amounts of an elementary pitch of 85µm (1/300 ths of an inch): in that way it is possible to form on the support 109 an image which is formed by dots placed on a grid of 300 dots/inch, both in a horizontal direction and in a vertical direction.

Emission of the ink on the part of the emission elements which are connected to the corresponding nozzles 114 can be selectively controlled by the electronic control 115 only during the forward movement in the direction indicated by the arrow 104, or both in the forward movement and in the return movement in the direction indicated by the arrow 105. Different head configurations 111 can also be used in regard to the correlation between ink emission elements and nozzles; in the case illustrated hereinbefore each emission element is connected to a single nozzle but printing heads are also known in the art in which each emission element is also connected to more than one nozzle, such as for example is described in US patent No 4 611 219. Even if reference is made hereinafter in this description to a head in which a single nozzle corresponds to each emission element, the method of the present invention can also be applied to any other configuration in respect of the printing head, for example to one in which more than one nozzle, for example up to 8 nozzles, correspond to each emission element.

The method embodying the present invention comprises breaking up each pass into an odd number N of fractions by means of an odd number N of scanning operations, in each of which each nozzle selectively prints a single dot each corresponding to an odd number N of image elements.

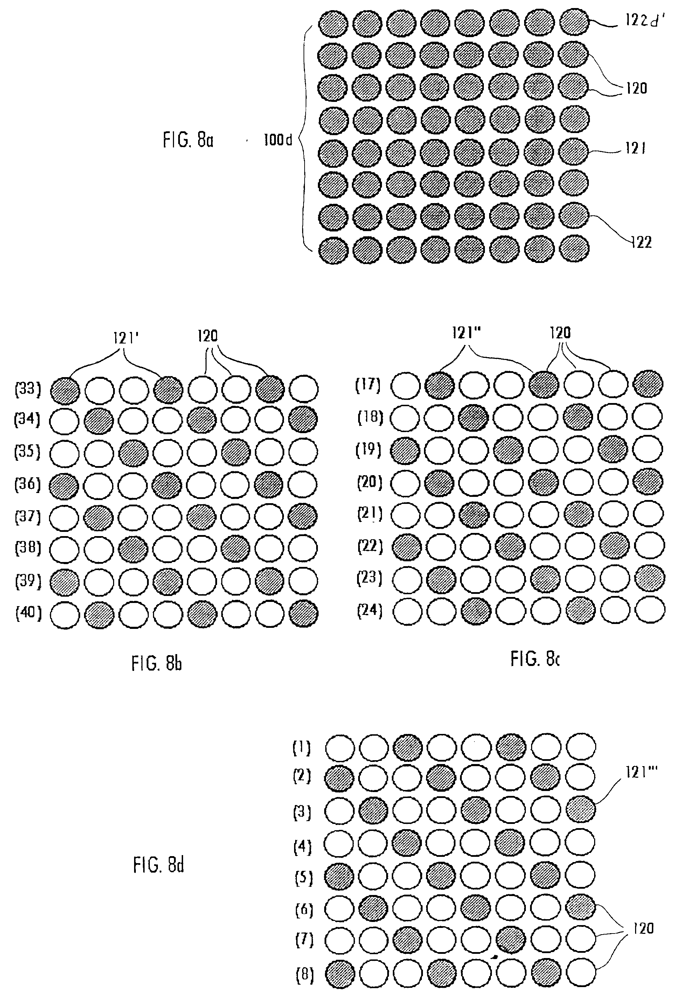

A first embodiment of the method will now be examined in detail by way of non-limiting example, in which said odd number N is equal to 3: to print on the support a uniform image 100d with a grey gradation involving an optical density of 100% (see Figure 8a where only 8 rows 122 each of 8 image elements 120 are shown for the sake of clarity), the image 100d will be formed by effecting three scanning operations.

In the first scanning operation (see Figure 8b), a part of the nozzles 114, for example those indicated by references 33 to 40 in Figure 2b and identified by the bracketed references in Figure 8b selectively emit the drops of ink corresponding only to a first group equal to a third of the image elements 120, thus printing a dot 121' every three image elements 120; in the second scanning operation (see Figure 8c), after the support has been advanced by a third of a line space, and thus, in the case taken for example of a head 111 as shown in Figure 2b, by a distance equal to 1.35mm (16/300 ths of an inch), another part of the nozzles 114, for example those referenced 17 to 24 in Figure 2b and identified by the bracketed references in Figure 8c, selectively emit the drops of ink corresponding to a second group formed by the image elements 120 subsequent with respect to those selected during the first scanning operation for printing the dots 121'', once again one dot every three; and finally in the third scanning operation (see Figure 8d) after the support is advanced again by a third of a line space, a further part of the nozzles 114, for example those referenced 1 to 8 in Figure 2b and identified by the bracketed references in Figure 8d, selectively emit the drops of ink corresponding to a third and last group formed by the image elements 120 not selected in the first scanning operation nor in the second scanning operation, for printing the dots 121''', this time also one dot every three. To sum up each individual row 122 of the image 100d is printed with the assistance of three different nozzles 114: for example the row 122d' in Figure 8a is printed with the assistance of the nozzles 1, 17 and 33.

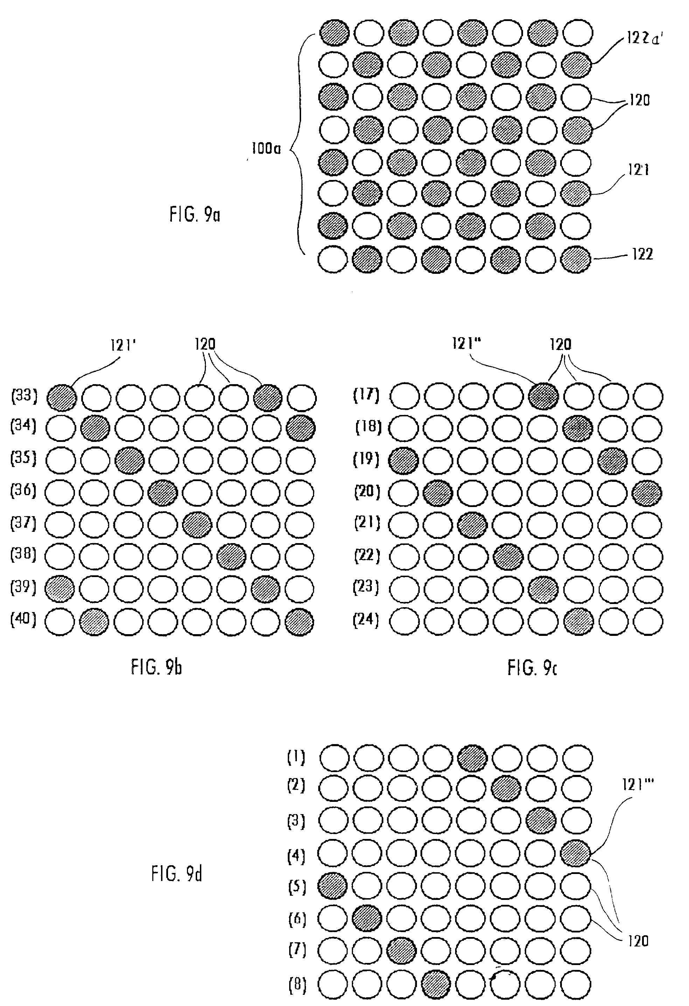

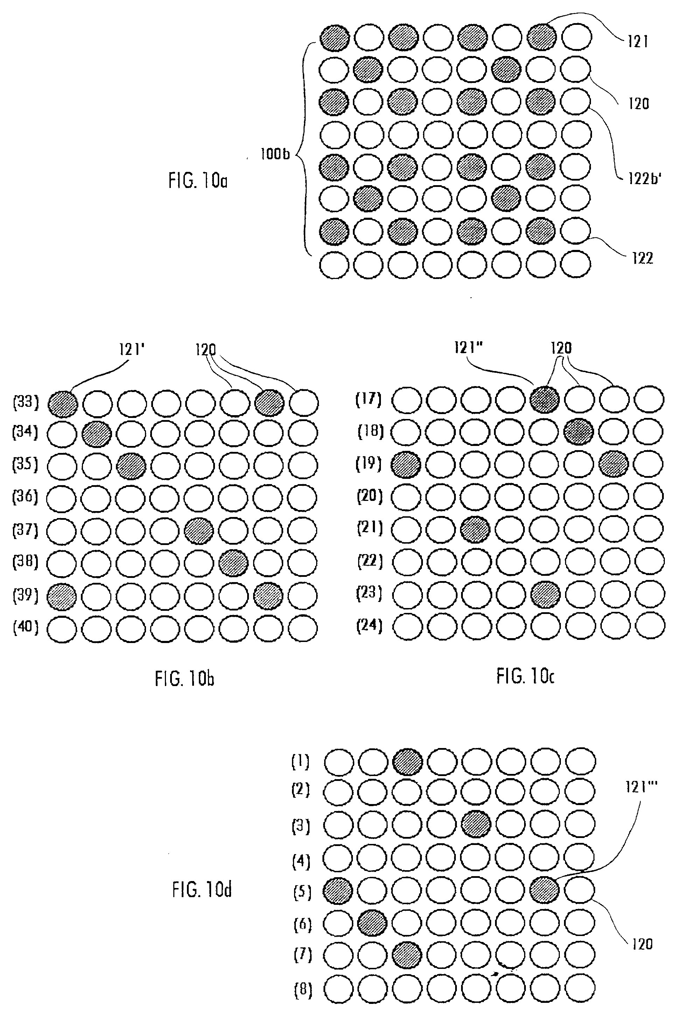

Figures 9a, 9b, 9c and 9d; 10a, 10b, 10c and 10d; and finally 11a, 11b, 11c and 11d respectively illustrate the cases of uniform images 100a, 100b and 100d with grey gradations with an optical density of 50%, 31.25% and 25%, using the method of the invention; by adopting the usual indications it is possible to arrive for example at an affirmation that in Figure 9a the row 122a' is printed with the assistance of the nozzles 2, 18 and 34; that in Figure 10a the row 122b' is printed by means of the nozzles 3, 19 and 35 and finally in Figure 11a the row 122c' is printed by means of the nozzles 5, 21 and 37.

By comparison with the similar cases known in the state of the art and illustrated in Figures 5a, 5b, 5c; 6a, 6b, 6c; and finally 7a, 7b, 7c, it is possible to clearly identify the improvement achieved by using the method in that each line 122 is always printed by means of 3 separate nozzles, thereby minimising the phenomena of non-uniformity caused by imperfections and non-homogeneities in the printing elements.

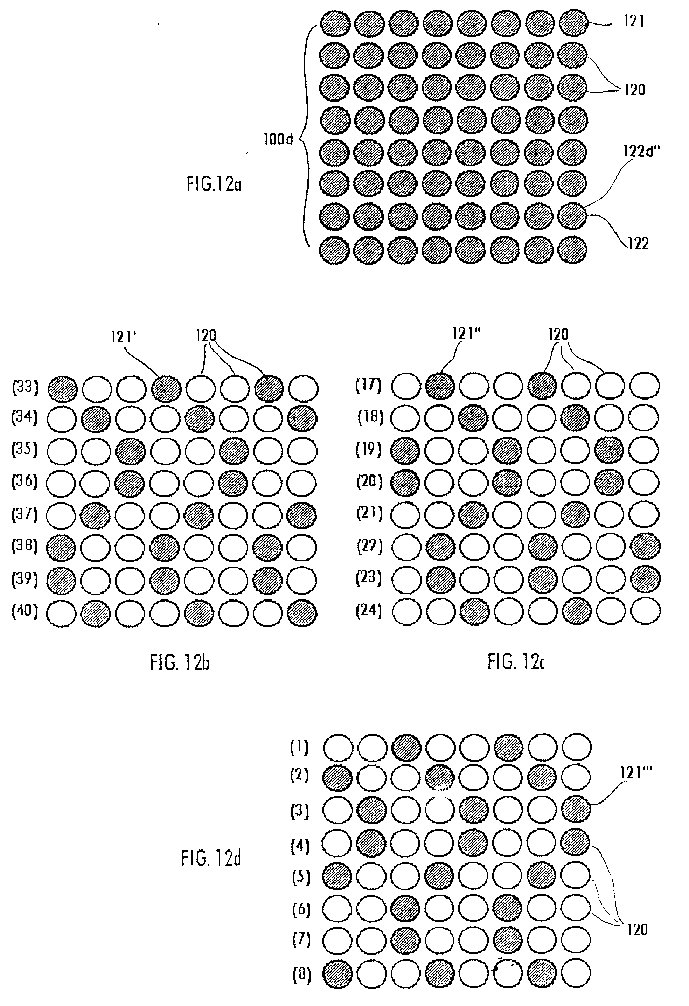

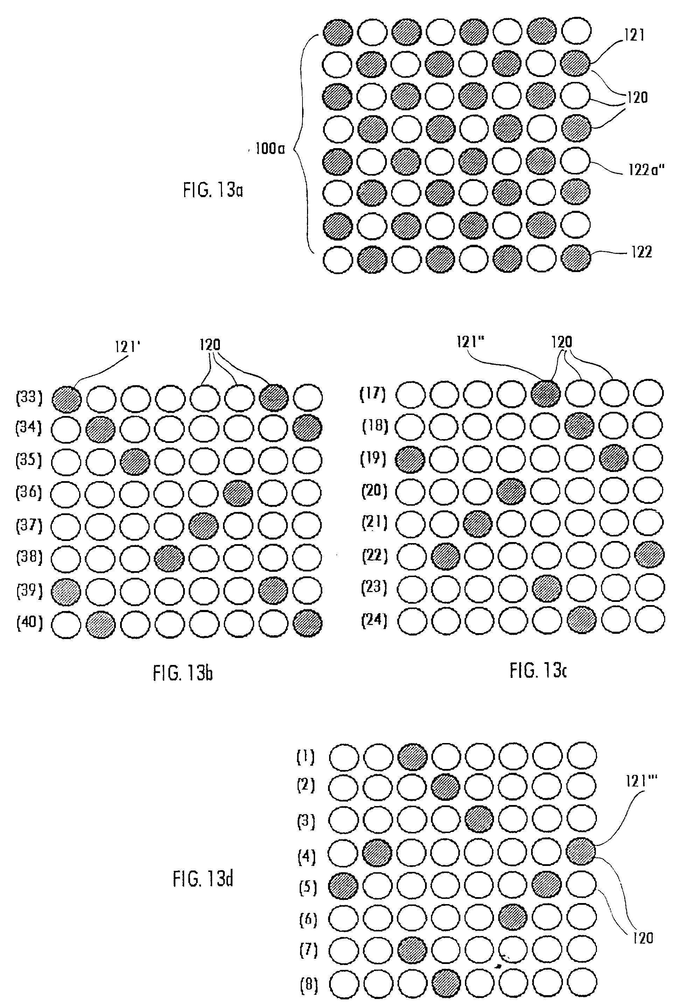

A second embodiment of the method is illustrated in Figures 12a, 12b, 12c and 12d, with reference to printing a uniform grey image 100d involving an optical density of 100%, and Figures 13a, 13b, 13c and 13d with reference to printing a uniform grey image 100a involving an optical density of 50%, using the same indications as the previous corresponding Figures; the variation relative to the embodiment described hereinbefore lies in the different subdivision of the image elements belonging to the 3 groups, corresponding to the image elements respectively selected in the first, second and third scanning operations, with respect to that used previously.

This is clearly illustrated in Figures 12b and 13b, 12c and 13c, and 12d and 13d which respectively show the dots 121' printed in the first scanning operation, the dots 121'' printed in the second scanning operation and the dots 121''' printed in the third scanning operation. It will also be immediately noted in this second embodiment of the method of the present invention that each individual row 122 of the images 100a and 100d is printed by means of three different nozzles 114: for example the row 122d'' in Figure 12a is printed by means of the nozzles 7, 23 and 39 and the row 122a'' in Figure 13a is printed by means of the nozzles 5, 21 and 37.

In particular the subdivision adopted is such as to avoid the formation of long diagonal sequences of dots which are printed in the same scanning operation, which may be preferable in the situation where it would be desired that the effect of any non-uniformities or imperfections in the advance movement of the support 109 through the printing apparatus 101 is also to be made less apparent.

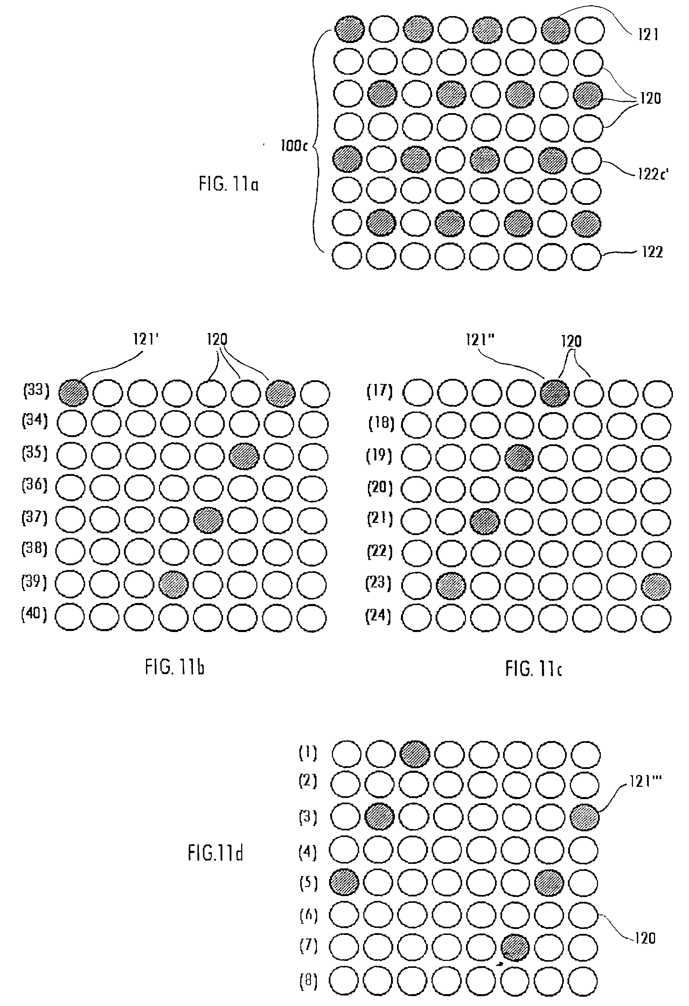

It is easy to understand for the man skilled in the art how the representations of the results of printing the uniform grey images 100b and 100d with optical densities of 31.5% and 25% would be modified when using this second embodiment of the present invention, relative to that illustrated respectively in Figures 10a, 10b, 10c and 10d, and also Figures 11a, 11b, 11c and 11d.

In the foregoing embodiments of the method the image elements 120 belonging to the same group and at which the nozzles 114 can emit the drops of ink in the same scanning operation are selected with the criterion that the dots which are adjacent both vertically and horizontally are no longer printed in the same scanning operation; it is however possible, while remaining within the scope of the present invention, to adopt an alternative configuration which involves selecting the image elements 120 belonging to the same group and at which the nozzles 114 can emit the drops of ink in the same scanning operation with the criterion that only the horizontally adjacent dots are not printed in the same scanning operation, but for example 2 or more vertically adjacent dots can be printed in the same scanning operation.

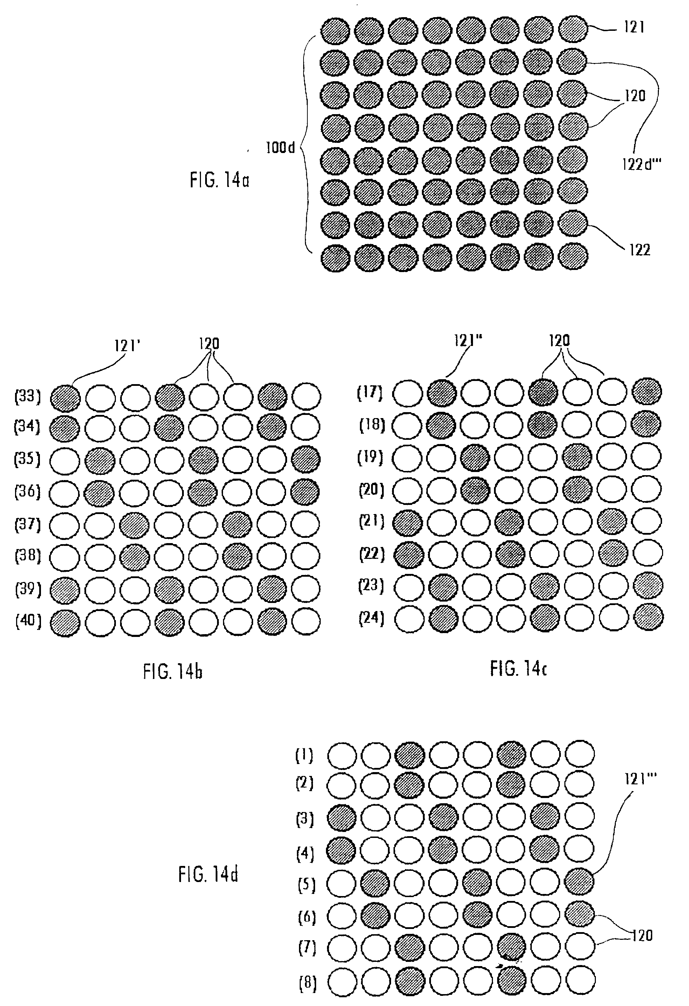

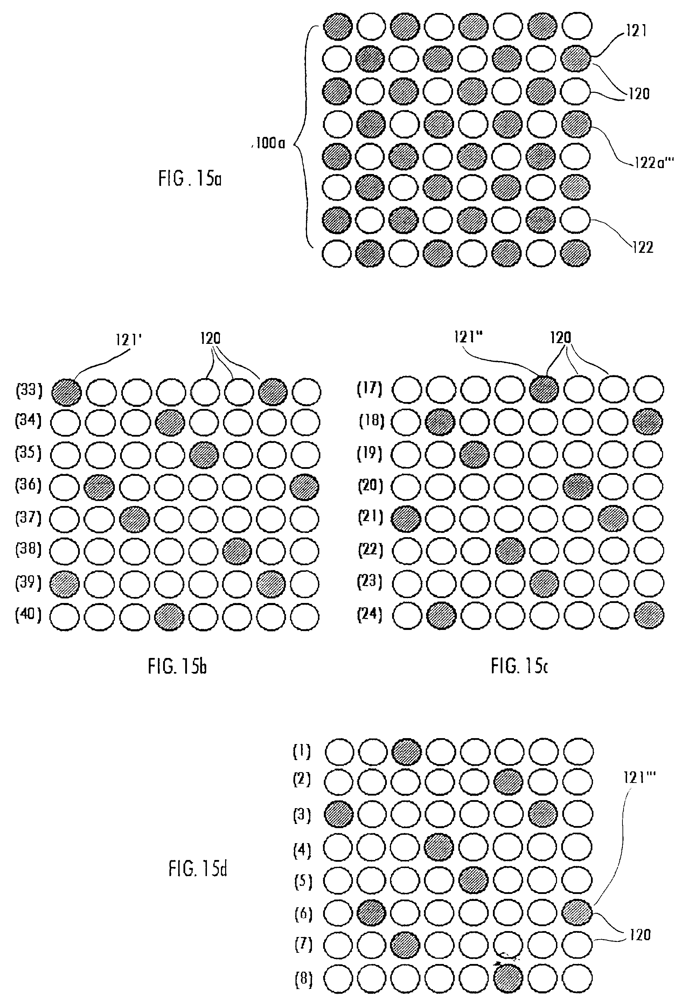

A third embodiment of the method which involves combining in each scanning operation a pair of vertically adjacent dots is thus illustrated in Figures 14a, 14b, 14c and 14d, with reference to printing a uniform grey image 100d involving optical density of 100%, and Figures 15a, 15b, 15c and 15d with reference to printing a uniform grey image 100a involving an optical density of 50%, using the same indications as in the preceding similar Figures; in particular Figures 14b and 15b, 14c and 15c and 14d and 15d respectively show the dots 121' printed in the first scanning operation, the dots 121'' printed in the second scanning operation and the dots 121''' printed in the third scanning operation. In this third embodiment of the method of the present invention also each individual row 122 of the image 100d is printed by means of three different nozzles 114: for example the row 122d''' in Figure 14a is printed by means of the nozzles 2, 18 and 34; and similarly each individual row 122 in the image 100a is printed by means of three different nozzles 114: for example the row 122a''' in Figure 15a is printed by means of the nozzles 4, 20 and 36.

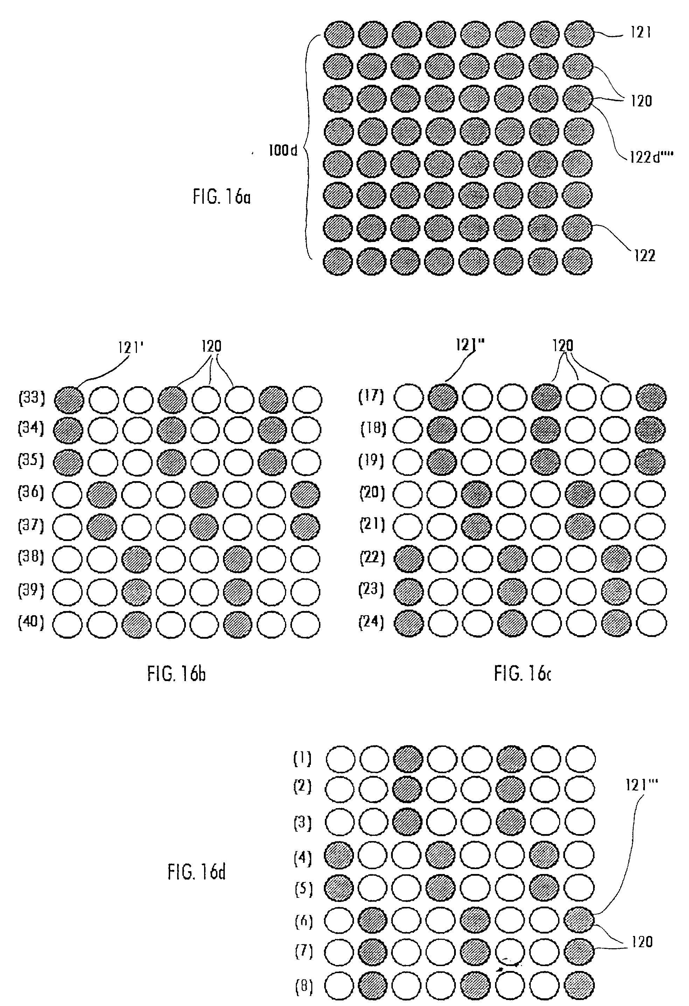

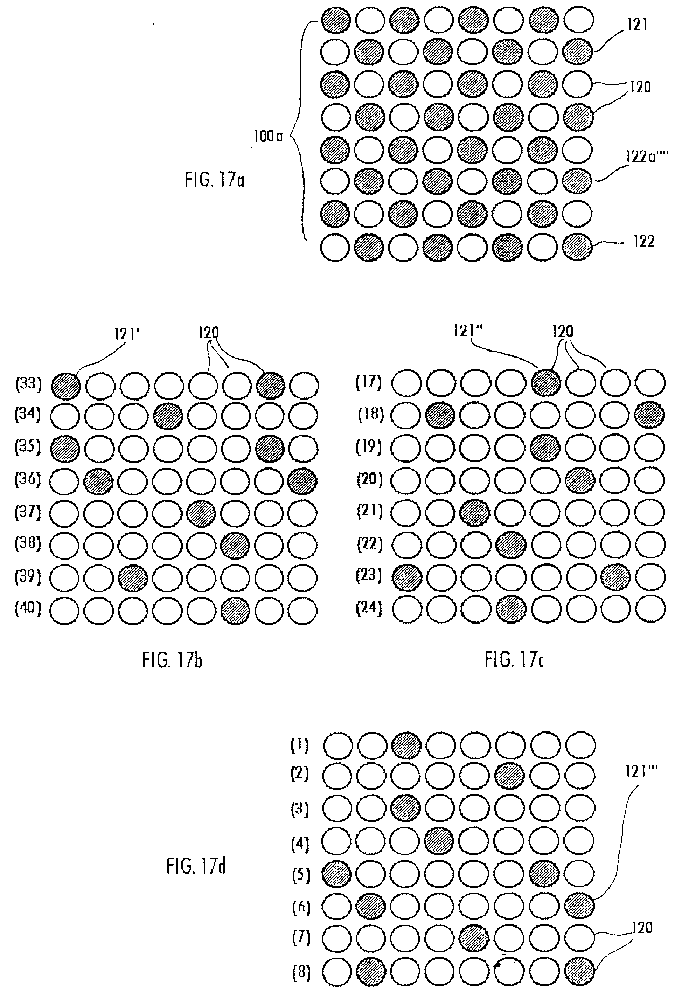

By combining together however 2 or 3 vertically adjacent image elements 120 in the same scanning operation it is possible to arrive at a fourth embodiment of the method; this is illustrated in Figures 16a, 16b, 16c and 16d, with reference to printing a uniform grey image 100d with an optical density of 100%, and Figures 17a, 17b, 17c and 17d with reference to printing a uniform grey image 100a with an optical density of 50%, using the same indications as in the previous corresponding Figures; in particular Figures 16b and 17b, 16c and 17c, and 16d and 17d respectively show the dots 121' printed in the first scanning operation, the dots 121'' printed in the second scanning operation and the dots 121''' printed in the third scanning operation.

This fourth embodiment of the method of the present invention also provides that each individual row 122 of the images 100a and 100d is printed by means of three different nozzles 114: for example the row 122d'''' in Figure 16a is printed by means of the nozzles 3, 19 and 35; and the row 122a'''' in Figure 17a is printed by means of the nozzles 6, 22 and 38.

It is easy for the man skilled in the art to understand how the representations of the results of printing the uniform grey images 100b and 100d with an optical density of 31.5% and 25% would be modified, using this third and fourth embodiment of the method of the present invention, relative to the procedures illustrated respectively in Figures 10a, 10b, 10c and 10d; and also Figures 11a, 11b, 11c and 11d.

It is possible to arrive at other embodiments of the above-described method by means of simple variations which can be easily derived on the part of a man skilled in the art; for example, more than three vertically adjacent image elements can be combined together in the same scanning operation, or the image elements which are selected in the same scanning operation can be disposed in a zig-zag configuration in a 4 by 4 arrangement. It is also readily possible for the man skilled in the art to understand the printing method according to the present invention in the situation where said odd number N is equal to 5; the result in that case is set out in summary form for the sake of brevity: each individual row of dots is formed by means of five different emission elements, each during one of the five scanning movements of the head to make up a pass, further improving the uniformity of the printing, even if at the expense of a lower speed.

The application of this new method has been described hereinbefore to the situation in which all the ink emission elements of the head are connected to a single ink reservoir (not shown) and therefore the images printed on the support are monochromatic. The ink reservoir may be of fixed type, as in the case of the above-illustrated head 111, or it may be of replaceable type, such that, once the ink contained therein has been consumed, it can be removed from the head and replaced by a reservoir which is full of ink, as is known in the art.

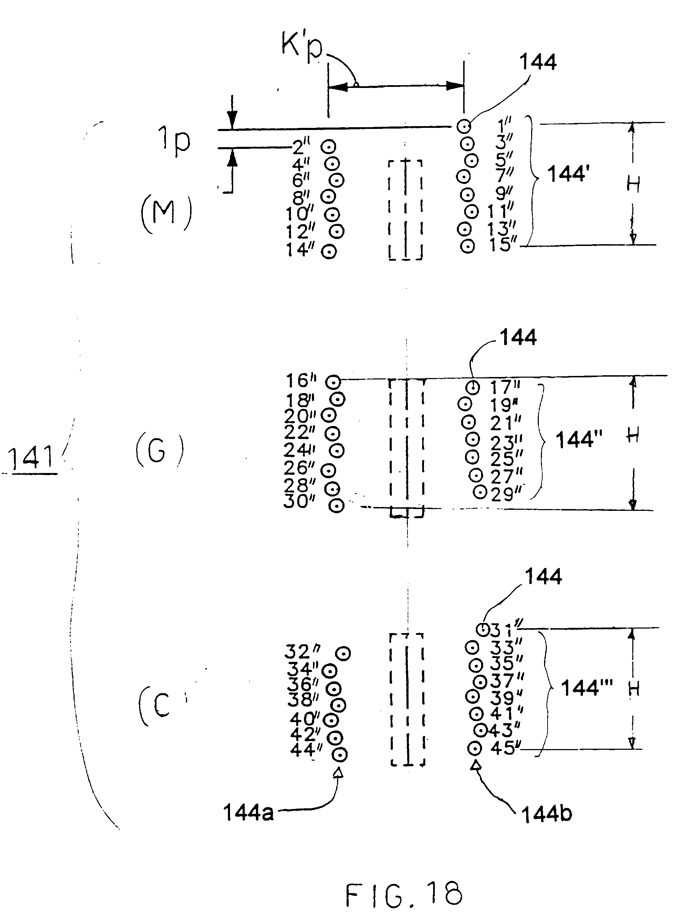

It is however possible for the method of the present invention also to be extended to the case of printing images in colours, with different intermediate colour tones or gradations; in that case a possible configuration of the printing head is that shown in Figure 18 where it is indicated by reference numeral 141.

The nozzles 144 are physically separated into three groups 144', 144'' and 144''', each group comprising a number of nozzles ranging from a minimum of 6 to a maximum of 48; in Figure 18, the case of 15 nozzles per group is illustrated. Each group is supplied from one of three separate ink reservoirs (not shown), each containing an ink of a different colour, for example cyan (C), magenta (M) and yellow (G). The three groups 144', 144'' and 144''' of nozzles 144 are aligned vertically and spaced from each other; each group is made up of two lines 144a and 144b which are spaced from each other by an integral number K' of elementary scanning pitches "p". The nozzles 144 belonging to the same line are vertically spaced by 2 elementary pitches "p", while the nozzles 144 of the first line 144a are displaced relative to the corresponding nozzles 144 of the second line 144b by 1 pitch "p".

The method of the present invention is applied to each of the three groups of nozzles 144', 144'' and 144''', with the obvious variation that the advance movement of the support in each partial scanning operation will be in this case for example only 1/3 of the height H (Figure 18) which can be printed by each group of nozzles, if reference is made here to an embodiment in which each pass is made up of an odd number N equal to 3 of scanning operations. Within the framework of each of the three colours corresponding to the three groups of nozzles 114', 114'' and 114''', using the printing method according to the present invention, it will thus be possible to achieve the same favourable effect of minimising the non-uniformities and imperfections, as already illustrated with reference to the case of the above-described monochromatic printing head.

More generally the printing method embodying the present invention can be described in more summarising terms in the following manner:
- subdividing all the image elements E which can be printed during a single scanning operation into N groups wherein N is an odd number, in such a way that in each of said groups there is a fraction E/N of image elements which are not horizontally adjacent,
- effecting N scanning operations, selectively activating in each thereof the emission elements only corresponding to the E/N image elements belonging to one of the N groups, without repetitions, and
- effecting a displacement of the head after each scanning operation by an amount equal to 1/N-th line spacing.

It will be clear to the man skilled in the art that the present invention may be the subject of modifications concerning, as already emphasised above, for example the criteria in regard to subdivision of the image elements into the above-mentioned N groups, the configuration of the arrangement for forming the images, or the way in which the relative movements as between the printing support and the carriage are effected, without thereby departing from the scope of the present invention.

It will also be clear that the method of the present invention which has been illustrated in detail in regard to the use thereof on an ink jet dot matrix printing apparatus may be advantageously used by any printing apparatus comprising a plurality of printing elements using a different technology, for example of impact type, thermal type, or the type involving thermal transfer or light emitting diodes.

## Claims

1. A method of printing (109) of graphic images on a support with different levels of optical density by means of a printing head (111) which is movable relative to said support in a first direction to perform scanning operations and in a second direction substantially normal to said first direction to perform line spacings, said levels being represented by a multiplicity of arrays of dots arranged in accordance with a grid with a given pitch of image elements E, wherein said head comprises a plurality of printing elements (1-48) which can be selectively activated in correspondence with said image elements for printing said dots by depositing drops of ink on said support, the method being characterised by comprising the steps of:
(a) subdividing said image elements E which can be printed in a single one of said scanning operations into N groups, N being an odd integer equal to or higher than 3;
(b) performing N scanning operations, selectively activating in each of said scanning operations said printing elements corresponding to said image elements belonging to one of said N groups; and
(c) effecting a relative displacement of said head in said second direction after each of said N scanning operations by an amount equal to 1/N-th line spacing; each of said N groups being formed by image elements (120) spaced such that dots in each row printed during a single scanning operation are no closer than 3 pitches.

2. A method according to claim 1 characterised in that each of said N groups is formed by E/N image elements.

3. A method according to claim 1 or 2 characterised in that said image elements are not adjacent in said second direction.

4. A method according to claim 1 or 2 characterised in that each of said N groups is formed by image elements which are adjacent 2 by 2 in said second direction.

5. A method according to claim 1 or 2 characterised in that each of said N groups is formed by image elements which are adjacent 3 by 3 in said second direction.

6. A method according to claim 1 or 2 characterised in that each of said N groups is formed by image elements which are adjacent in part 2 by 2 and in part 3 by 3 in said second direction.

7. A method according to any preceding claim characterised in that said displacement is effected by advancing said support in said second direction.

8. A method according to any of claims 1 to 6 characterised in that said displacement is effected by advancing said head in said second direction.

9. A method according to claim 1 characterised in that said arrays of dots are disposed on a grid of 4x4 of said image elements.

10. A method according to claim 1 characterised in that said arrays of dots are disposed on a grid of 8x8 of said image elements.

11. A method according to claim 1 characterised in that said arrays of dots are disposed on a grid of 16x16 of said image elements.

12. A method according to claim 1 characterised in that said arrays of dots are disposed on a grid of 32x32 of said image elements.

13. A method according to any preceding claim characterised in that said pitch is of a value of between about 250µm and 40µm (1/100-th and 1/600-th of an inch).

14. A method according to any preceding claim wherein said scanning operations are formed by a forward movement (104) and an opposite return movement (105) characterised in that printing of said dots by said printing elements takes place only during said forward movement.

15. A method according to any of claims 1 to 13 characterised in that said scanning operations are formed by a forward movement (104) and an opposite return movement (105)and the printing of said dots by said printing elements takes place both during said forward movement and during said return movement.

16. An ink jet dot matrix printing apparatus for printing on a support (109) of graphic images with different levels of optical density, said levels being represented by a multiplicity of arrays of dots arranged in accordance with a grid with a given pitch of image elements E, comprising:
a printing head (111) which is movable relative to said support in a first direction to perform scanning operations, and in a second direction substantially normal to said first direction to perform line spacings, said head comprising a plurality of printing elements (1-48) which can be selectively activated in accordance with said image elements for printing said dots by depositing drops of ink on said support; and characterised by comprising
electronic control means (115) for subdividing, according to a given criterium, said image elements E which can be printed in a single one of said scanning operations into N groups, N being an odd integer equal to or higher than 3; for performing N scanning operations, selectively activating in each of said scanning operations said printing elements corresponding to said image elements (120) belonging to one of said N groups; and for effecting a relative displacement of said head in said second direction after each of said N scanning operations by an amount equal to 1/N-th line spacing, and in that said criterium according to which said electronic control means (115) subdivides said image elements is that each of said N groups is formed by image elements (120) spaced such that dots in each row printed during a single scanning operation are no closer than 3 pitches.

17. An apparatus according to claim 16 in which said scanning operations are formed by a forward movement (104) and an opposite return movement (105), further characterised by comprising selection means (115) for selecting a first and a second of two modes of emission of said ink by said printing elements, said first of said two modes comprising emitting ink only during said forward movement and said second of said two modes comprising emitting ink during both said forward and said return movement.

18. An apparatus according to claim 16 or 17 characterised in that said plurality of emission elements is between 20 and 120 in number.

19. An apparatus according to claim 16, 17 or 18 characterised in that said ink is monochromatic.

20. An apparatus according to any of claims 16 to 19 characterised in that said emission elements emit drops of ink by way of corresponding nozzles (114), said nozzles being disposed in two substantially mutually parallel lines.

21. An apparatus according to claim 20 characterised in that said nozzles (114) are between 1 and 8 in number for each of said printing elements.

22. An apparatus according to any of claims 16 to 21 characterised in that said printing head further comprises storage means for containing said ink, said storage means being of replaceable type.

23. An apparatus according to any of claims 16 to 22 characterised in that said plurality of printing elements is subdivided into 3 groups, each of which is capable of printing dots with one of three inks of mutually different colours.

24. An apparatus according to claim 23 characterised in that each of said three groups comprises a number of printing elements of between 6 and 48.

25. An apparatus according to claim 23 or 24 characterised in that said printing elements are disposed in two substantially mutually parallel lines aligned in said second direction.

26. An apparatus according to claim 23, 24 or 25 characterised in that said three inks of different colours are respectively cyan, yellow and magenta.

## Patentansprüche

1. Verfahren zum Drucken (109) von Graphikbildern auf einen Träger mit verschiedenen optischen Dichtegraden mit Hilfe eines Druckkopfes (111), der relativ zu dem genannten Träger in einer ersten Richtung bewegbar ist, um Abtastvorgänge durchzuführen, und in einer zweiten Richtung bewegbar ist, die im wesentlichen senkrecht zur genannten ersten Richtung ist, um Zeilenabstände zu bilden, wobei die genannten Grade durch eine Vielzahl von Punktanordnungen repräsentiert werden, die gemäß einem Raster von Bildelementen E mit einer bestimmten Teilung angeordnet sind, wobei der genannte Kopf eine Mehrzahl von Druckelementen (1-48) umfaßt, die in Übereinstimmung mit den genannten Bildelementen selektiv aktiviert werden können, um die genannten Punkte zu drucken, indem Druckfarbtropfen auf den genannten Träger abgesetzt werden, wobei das Verfahren durch die folgenden Schritte gekennzeichnet ist:
(a) Unterteilen der genannten Bildelemente E, die in einem einzigen genannten Abtastvorgang gedruckt werden können, in N Gruppen, wobei N eine ungerade ganze Zahl gleich oder größer als 3 ist;
(b) Durchführen von N Abtastvorgängen, wobei in jedem der genannten Abtastvorgänge die genannten Druckelemente in Übereinstimmung mit den genannten Bildelementen selektiv aktiviert werden, die zu einer der genannten N Gruppen gehören; und
(c) Herbeiführen einer relativen Verschiebung des genannten Kopfes in die genannte zweite Richtung nach jedem der genannten N Abtastvorgänge um einen Betrag, der 1/Ntel Zeilenabstand entspricht; wobei jede der genannten N Gruppen von Bildelementen (120) gebildet werden, die so voneinander beabstandet sind, daß während eines einzelnen Abtastvorgangs gedruckte Punkte in jeder Reihe einen Abstand von wenigstens 3 Teilungen voneinander haben.

2. Verfahren nach Anspruch 1, dadurch gekennzeichnet, daß jede der genannten N Gruppen von E/N Bildelementen gebildet wird.

3. Verfahren nach Anspruch 1 oder 2, dadurch gekennzeichnet, daß die genannten Bildelemente in der genannten zweiten Richtung nicht nebeneinanderliegen.

4. Verfahren nach Anspruch 1 oder 2, dadurch gekennzeichnet, daß jede der genannten N Gruppen von Bildelementen gebildet wird, die zu zweit in der genannten zweiten Richtung nebeneinanderliegen.

5. Verfahren nach Anspruch 1 oder 2, dadurch gekennzeichnet, daß jede der genannten N Gruppen von Bildelementen gebildet wird, die zu dritt in der genannten zweiten Richtung nebeneinanderliegen.

6. Verfahren nach Anspruch 1 oder 2, dadurch gekennzeichnet, daß jede der genannten N Gruppen von Bildelementen gebildet wird, die teilweise zu zweit und teilweise zu dritt in der genannten zweiten Richtung nebeneinanderliegen.

7. Verfahren nach einem der vorherigen Ansprüche, dadurch gekennzeichnet, daß die genannte Verschiebung herbeigeführt wird, indem der genannte Träger in der genannten zweiten Richtung vorgeschoben wird.

8. Verfahren nach einem der Ansprüche 1 bis 6, dadurch gekennzeichnet, daß die genannte Verschiebung herbeigeführt wird, indem der genannte Kopf in der genannten zweiten Richtung vorgeschoben wird.

9. Verfahren nach Anspruch 1, dadurch gekennzeichnet, daß die genannten Punktanordnungen auf einem 4x4-Raster der genannten Bildelemente angeordnet sind.

10. Verfahren nach Anspruch 1, dadurch gekennzeichnet, daß die genannten Punktanordnungen auf einem 8x8-Raster der genannten Bildelemente angeordnet sind.

11. Verfahren nach Anspruch 1, dadurch gekennzeichnet, daß die genannten Punktanordnungen auf einem 16x16-Raster der genannten Bildelemente angeordnet sind.

12. Verfahren nach Anspruch 1, dadurch gekennzeichnet, daß die genannten Punktanordnungen auf einem 32x32-Raster der genannten Bildelemente angeordnet sind.

13. Verfahren nach einem der vorherigen Ansprüche, dadurch gekennzeichnet, daß die genannte Teilung einen Wert zwischen etwa 250 Am und 40 µm (1/100tel und 1/600tel eines Zolls) hat.

14. Verfahren nach einem der vorherigen Ansprüche, bei dem die genannten Abtastvorgänge aus einer Vorwärtsbewegung (104) und einer entgegengesetzten Rückwärtsbewegung (105) bestehen, dadurch gekennzeichnet, daß der Druck der genannten Punkte mit den genannten Druckelementen nur während der genannten Vorwärtsbewegung stattfindet.

15. Verfahren nach einem der Ansprüche 1 bis 13, dadurch gekennzeichnet, daß die genannten Abtastvorgänge aus einer Vorwärtsbewegung (104) und einer entgegengesetzten Rückwärtsbewegung (105) bestehen und der Druck der genannten Punkte mit den genannten Druckelementen während der genannten Vorwärtsbewegung und während der genannten Rückwärtsbewegung stattfindet.

16. Tintenstrahl-Rasterdruckvorrichtung zum Drucken von Graphikbildern auf einen Träger (109) mit verschiedenen optischen Dichtegraden, wobei die genannten Grade durch eine Vielzahl von Punktanordnungen repräsentiert werden, die gemäß einem Raster von Bildelementen E mit einer bestimmten Teilung angeordnet sind, umfassend:
einen Druckkopf (111), der relativ zu dem genannten Träger in einer ersten Richtung bewegbar ist, um Abtastvorgänge durchzuführen, und in einer zweiten Richtung bewegbar ist, die im wesentlichen senkrecht zur genannten ersten Richtung ist, um Zeilenabstände zu bilden, wobei der genannte Kopf eine Mehrzahl von Druckelementen (1-48) umfaßt, die in Übereinstimmung mit den genannten Bildelementen selektiv aktiviert werden können, um die genannten Punkte zu drucken, indem Druckfarbtropfen auf den genannten Träger abgesetzt werden; und durch folgendes gekennzeichnet:
ein elektronisches Steuermittel (115), um die genannten Bildelemente E, die in einem einzelnen genannten Abtastvorgang gedruckt werden können, gemäß einem bestimmten Kriterium in N Gruppen zu unterteilen, wobei N eine ungerade ganze Zahl gleich oder größer als 3 ist; um N Abtastvorgänge durchzuführen, wobei in jedem der genannten Abtastvorgänge die genannten Druckelemente in Übereinstimmung mit den genannten Bildelementen (120), die zu einer der genannten N Gruppen gehören, selektiv aktiviert werden; und um eine relative Verschiebung des genannten Kopfes in die genannte zweite Richtung nach jedem der genannten N Abtastvorgänge um einen Betrag herbeizuführen, der 1/Ntel Zeilenabstand entspricht, und dadurch, daß das genannte Kriterium, gemäß dem das genannte elektronische Steuermittel (115) die genannten Bildelemente unterteilt, darin besteht, daß jede der genannten N Gruppen durch Bildelemente (120) gebildet wird, die so voneinander beabstandet sind, daß während eines einzelnen Abtastvorgangs gedruckte Punkte in jeder Reihe einen Abstand von wenigstens 3 Teilungen voneinander haben.

17. Vorrichtung nach Anspruch 16, bei der die genannten Abtastvorgänge aus einer Vorwärtsbewegung (104) und einer entgegengesetzten Rückwärtsbewegung (105) bestehen, ferner dadurch gekennzeichnet, daß sie folgendes umfaßt: Auswahlmittel (115) zum Auswählen einer ersten und einer zweiten von zwei Betriebsarten zur Abgabe der genannten Druckfarbe durch die genannten Druckelemente, wobei die genannte erste der genannten zwei Betriebsarten das Abgeben von Druckfarbe nur während der genannten Vorwärtsbewegung beinhaltet und die genannte zweite der genannten zwei Betriebsarten das Abgeben von Druckfarbe während der genannten Vorwärtsbewegung und der genannten Rückwärtsbewegung beinhaltet.

18. Vorrichtung nach Anspruch 16 oder 17, dadurch gekennzeichnet, daß die genannte Mehrzahl von Abgabeelementen bei einer Zahl zwischen 20 und 120 liegt.

19. Vorrichtung nach Anspruch 16, 17 oder 18, dadurch gekennzeichnet, daß die genannte Druckfarbe monochromatisch ist.

20. Vorrichtung nach einem der Ansprüche 16 bis 19, dadurch gekennzeichnet, daß die genannten Abgabeelemente Druckfarbtropfen über entsprechende Düsen (114) abgeben, wobei die genannten Düsen in zwei im wesentlichen parallel zueinander liegenden Zeilen angeordnet sind.

21. Vorrichtung nach Anspruch 20, dadurch gekennzeichnet, daß zwischen 1 und 8 [*1] der genannten Düsen (114) für jedes der genannten Druckelemente vorhanden sind.

22. Vorrichtung nach einem der Ansprüche 16 bis 21, dadurch gekennzeichnet, daß der genannte Druckkopf ferner ein Aufbewahrungsmittel für die Aufnahme der genannten Druckfarbe umfaßt, wobei das genannte Aufbewahrungsmittel austauschbar ist.

23. Vorrichtung nach einem der Ansprüche 16 bis 22, dadurch gekennzeichnet, daß die genannte Mehrzahl der Druckelemente in 3 Gruppen unterteilt wird, von denen jede in der Lage ist, Punkte mit einer von drei Druckfarben unterschiedlicher Farbe zu drucken.

24. Vorrichtung nach Anspruch 23, dadurch gekennzeichnet, daß jede der genannten drei Gruppen zwischen 6 und 48 [*1] Druckelemente umfaßt.

25. Vorrichtung nach Anspruch 23 oder 24, dadurch gekennzeichnet, daß die genannten Druckelemente in zwei im wesentlichen parallel zueinander liegenden Zeilen angeordnet sind, die in der genannten zweiten Richtung ausgerichtet sind.

26. Vorrichtung nach Anspruch 23, 24 oder 25, dadurch gekennzeichnet, daß die genannten drei Druckfarben unterschiedlicher Farbe jeweils Cyan, Gelb und Magenta sind.

## Revendications

1. Procédé d'impression (109) d'images graphiques sur un support avec différents niveaux de densité optique au moyen d'une tête d'impression (111) qui est déplaçable par rapport audit support dans un premier sens en vue d'effectuer des opérations de balayage et dans un deuxième sens sensiblement perpendiculaire audit premier sens en vue de former des espacements de lignes, lesdits niveaux étant représentés par une multiplicité de matrices de points conformément à une grille avec un pas donné d'éléments d'image E, dans lequel ladite tête comprend une pluralité d'éléments d'impression (1 à 48) qui peuvent être activés sélectivement en correspondance avec lesdits éléments d'image pour imprimer lesdits points en déposant des gouttes d'encre sur ledit support, le procédé étant caractérisé par le fait qu'il comprend les étapes de :
(a) subdivision desdits éléments d'image E qui peuvent être imprimés dans une seule desdites opérations de balayage en N groupes, N étant un nombre entier impair égal ou supérieur à 3 ;
(b) exécution de N opérations de balayage, en activant sélectivement dans chacune desdites opérations de balayage lesdits éléments d'impression correspondant auxdits éléments d'image appartenant à un desdits N groupes ; et
(c) réalisation d'un déplacement relatif de ladite tête dans ledit deuxième sens après chacune desdites N opérations de balayage par une quantité égale à un espacement de ligne de 1/N^{e} ; chacun desdits N groupes étant formé par des élément d'image (120) espacés de telle sorte que les points dans chaque rangée imprimée durant une seule opération de balayage ne soient pas plus proches que 3 pas.

2. Procédé selon la revendication 1, caractérisé en ce que chacun desdits N groupes est formé par E/N éléments d'image.

3. Procédé selon la revendication 1 ou 2, caractérisé en ce que lesdits éléments d'image ne sont pas adjacents dans ledit deuxième sens.

4. Procédé selon la revendication 1 ou 2, caractérisé en ce que chacun desdits N groupes est formé par des éléments d'image qui sont adjacents 2 par 2 dans ledit deuxième sens.

5. Procédé selon la revendication 1 ou 2, caractérisé en ce que chacun desdits N groupes est formé par des éléments d'image qui sont adjacents 3 par 3 dans ledit deuxième sens.

6. Procédé selon la revendication 1 ou 2, caractérisé en ce que chacun desdits N groupes est formé par des éléments d'image qui sont adjacents en partie 2 par 2 et en partie 3 par 3 dans ledit deuxième sens.

7. Procédé selon l'une quelconque des revendications précédentes, caractérisé en ce que ledit déplacement est effectué en avançant ledit support dans ledit deuxième sens.

8. Procédé selon l'une quelconque des revendications 1 à 6, caractérisé en ce que ledit déplacement est effectué en avançant ladite tête dans ledit deuxième sens.

9. Procédé selon la revendication 1, caractérisé en ce que lesdites matrices de points sont disposées sur une grille de 4x4 desdits éléments d'image.

10. Procédé selon la revendication 1, caractérisé en ce que lesdites matrices de points sont disposées sur une grille de 8x8 desdits éléments d'image.

11. Procédé selon la revendication 1, caractérisé en ce que lesdites matrices de points sont disposées sur une grille de 16x16 desdits éléments d'image.

12. Procédé selon la revendication 1, caractérisé en ce que lesdites matrices de points sont disposées sur une grille de 32x32 desdits éléments d'image.

13. Procédé selon l'une quelconque des revendications précédentes, caractérisé en ce que ledit pas est d'une valeur entre environ 250µm et 40µm (1/100^{e} et 11/600^{e} de pouce).

14. Procédé selon l'une quelconque des revendications précédentes, dans lequel lesdites opérations de balayage sont formées par un mouvement vers l'avant (104) et un mouvement de retour opposé (105), caractérisé en ce que ladite impression desdits points par lesdits éléments d'impression a lieu uniquement durant ledit mouvement vers l'avant.

15. Procédé selon l'une quelconque des revendications 1 à 13, caractérisé en ce que lesdites opérations de balayage sont formées par un mouvement vers l'avant (104) et un mouvement de retour opposé (105) et l'impression desdits points par lesdits éléments d'impression a lieu à la fois durant ledit mouvement vers l'avant et durant ledit mouvement de retour.

16. Dispositif d'impression matricielle à jet d'encre pour imprimer sur un support (109) des images graphiques avec différents niveaux de densité optique, lesdits niveaux étant représentés par une multiplicité de matrices de points disposées conformément à une grille avec un pas donné d'éléments d'image E, comprenant :
une tête d'impression (111) qui est déplaçable par rapport audit support dans un premier sens en vue d'effectuer des opérations de balayage, et dans un deuxième sens sensiblement perpendiculaire audit premier sens en vue de former des espacements de lignes, ladite tête comprenant une pluralité d'éléments d'impression (1 à 48) qui peuvent être activés sélectivement en correspondance avec lesdits éléments d'image pour imprimer lesdits points en déposant des gouttes d'encre sur ledit support ; et caractérisé par le fait qu'il comprend :
un moyen de commande électronique (115) pour subdiviser, conformément à un critère donné, lesdits éléments d'image E qui peuvent être imprimés dans une seule desdites opérations de balayage en N groupes, N étant un nombre entier impair égal ou supérieur à 3 ; pour exécuter N opérations de balayage, en activant sélectivement dans chacune desdites opérations de balayage lesdits éléments d'impression correspondant auxdits éléments d'image appartenant à un desdits N groupes ; et pour effectuer un déplacement relatif de ladite tête dans ledit deuxième sens après chacune desdites N opérations de balayage par une quantité égale à un espacement de ligne de 1/N^{e}, et en ce que ledit critère conformément auquel ledit moyen de commande électronique (115) subdivise lesdits éléments d'image est que chacun desdits N groupes est formé par des éléments d'image (120) espacés de telle sorte que les points dans chaque rangée imprimée durant une seule opération de balayage ne soient pas rapprochés de plus de 3 pas.

17. Dispositif selon la revendication 16, dans lequel lesdites opérations de balayage sont formées par un mouvement vers l'avant (104) et un mouvement de retour opposé (105), caractérisé en outre par le fait qu'il comprend un moyen de sélection (115) pour sélectionner un premier et un deuxième de deux modes d'émission de ladite encre par lesdits éléments d'impression, ledit premier desdits deux modes comprenant l'émission d'encre uniquement durant ledit mouvement vers l'avant et ledit deuxième desdits deux modes comprenant l'émission d'encre durant à la fois le mouvement vers l'avant et le mouvement de retour.

18. Dispositif selon la revendication 16 ou 17, caractérisé en ce que ladite pluralité d'éléments d'émission compte entre 20 et 120 éléments.

19. Dispositif selon la revendication 16, 17 ou 18, caractérisé en ce que ladite encre est monochromatique.

20. Dispositif selon l'une quelconque des revendications 16 à 19, caractérisé en ce que lesdits éléments d'émission émettent des gouttes d'encre au moyen de buses correspondantes (114), lesdites buses étant disposées sur deux lignes sensiblement mutuellement parallèles.

21. Dispositif selon la revendication 20, caractérisé en ce que lesdites buses (114) se montent entre 1 à 8 pour chacun desdits éléments d'impression.

22. Dispositif selon l'une quelconque des revendications 16 à 21, caractérisé en ce que ladite tête d'impression comprend en outre un moyen de stockage pour contenir ladite encre, ledit moyen de stockage étant d'un type remplaçable.

23. Dispositif selon l'une quelconque des revendications 16 à 22, caractérisé en ce que ladite pluralité d'éléments d'impression est subdivisée en 3 groupes, chacun d'eux étant capable d'imprimer des points avec une de trois encres de couleurs mutuellement différentes.

24. Dispositif selon la revendication 23, caractérisé en ce que chacun desdits trois groupes comprend un certain nombre d'éléments d'impression entre 6 et 48.

25. Dispositif selon la revendication 23 ou 24, caractérisé en ce que lesdits éléments d'impression sont disposés sur deux lignes sensiblement mutuellement parallèles alignées dans ledit deuxième sens.

26. Dispositif selon la revendication 23, 24 ou 25, caractérisé en ce que lesdites trois encres de couleurs différentes sont respectivement le cyan, le jaune et le magenta.
